# EUROPEAN PATENT SPECIFICATION

(11) **EP 0 857 270 B1**
(45) Date of publication and mention of the grant of the patent: **14.07.1999**
(21) Application number: 96931173.7
(22) Date of filing: 24.09.1996
(51) Int. Cl.: F16K 27/06, F16K 27/00

(54) **DOUBLE OBTURATOR VALVE**
DOPPEL-VERSCHLUSS-VENTIL
VANNE A DEUX OBTURATEURS

(30) Priority: 29.09.1995 GB 9519828
(43) Date of publication of application: 12.08.1998
(73) Proprietor: BTR plc, London SW1P 2PL (GB)
(72) Inventor: PARKER, Christopher, Jack, Shropshire SY2 5NS (GB); GORMAN, Peter, Alfred, Shropshire TF3 1QP (GB)
(74) Representative: Treves, Barry William
(86) International application number: GB9602338
(87) International publication number: WO9713085

(56) References cited:
- GB-A- 915 446
- US-A- 2 048 975

## Description

This invention relates to a valve.

The publication entitled "Specification for Pipeline Valves (Gate, Plug, Ball and Check Valves)", and abbreviated as API Specification 6D (twenty first edition published 31 March 1994), discloses various types of valve each comprising a valve body having a passageway closeable by a single obturator.

GB-A-914556 discloses a fluid control valve comprising a valve body having three bores mutually meeting at a juncture, two of the bores being intersected by a tapered plug valve casing in close proximity to the juncture.

For various reasons it is sometimes necessary to put valves in series i.e. one after the other in a pipeline. However for valves particularly used in larger diameter pipelines e.g. 12 inches (approximately 300 mm) and greater because of the size of associated actuators, handles and other equipment and often space is limited this is not always readily achievable.

It is an object of the present invention to overcome or at least reduce the effect of this disadvantage.

In accordance with the invention a valve comprises a body having two standard parallel flanges for attachment to pipework and a passageway therethrough for flow of medium, characterised by two tapered bores intercepting said passageway, the axes of the bores extending transversely of the passageway, two obturators comprising tapered plugs being located one in each of the bores, each plug being rotatable about the respective axis of the bore between a closed position wherein said passageway is blocked and an open position wherein said passageway is unblocked, the axis of one obturator and associated bore being arranged at an angle of at least 90° with respect to the axis of the other obturator and associated bore, wherein the body has two standard parallel flanges for connection to pipework, the flanges being spaced apart by a longitudinal distance which is the same as the standard distance for a valve comprising one obturator and associated bore.

The axis of said one obturator and associated bore may be arranged at an angle of between 90° and 180° with respect to the axis of said other obturator and associated bore.

The axis of said one obturator and associated bore may be arranged at an angle of 180° with respect to the axis of said other obturator and associated bore thus said one obturator and associated bore is inverted with respect to said other obturator and associated bore.

Preferably two drive shafts are provided one drive shaft being associated with said one obturator and the other associated with said other obturator. the axis of each drive shaft being the same as the axis of the associated obturator and the axes of the two drive shafts being substantially parallel One drive shaft preferably extends in one direction and the other preferably in the opposite direction e.g. one extending vertically upwards and the other vertically downwards.

Two rotatable handles may be provided one handle being associated with said one obturator and the other handle associated with said other obturator. each handle being operable to rotate its associated obturator between said closed position and said open position, both handles being located on the same side of the valve.

The valve may comprise two actuators one attached to said one drive shaft through a gear system and the other actuator being attached to said other drive shaft through another gear system. The two actuators may each comprise one of two rotatable handles, both handles being located on the same side of the valve

The axes of rotation of the two handles may be parallel.

As stated above, the valve body comprises two standard flanges each for attachment to pipework, the longitudinal distance between the flanges being a standard distance the same as that for a valve comprising only one obturator and associated bore. Examples of relevant standards in use in the oil and gas industry and setting out standard distances are API Specification.6D (referred to above), BS2080, BS5353 and ANSI.B16.10

One embodiment of the invention will now be described by way of example only with reference to the accompanying drawings of which:

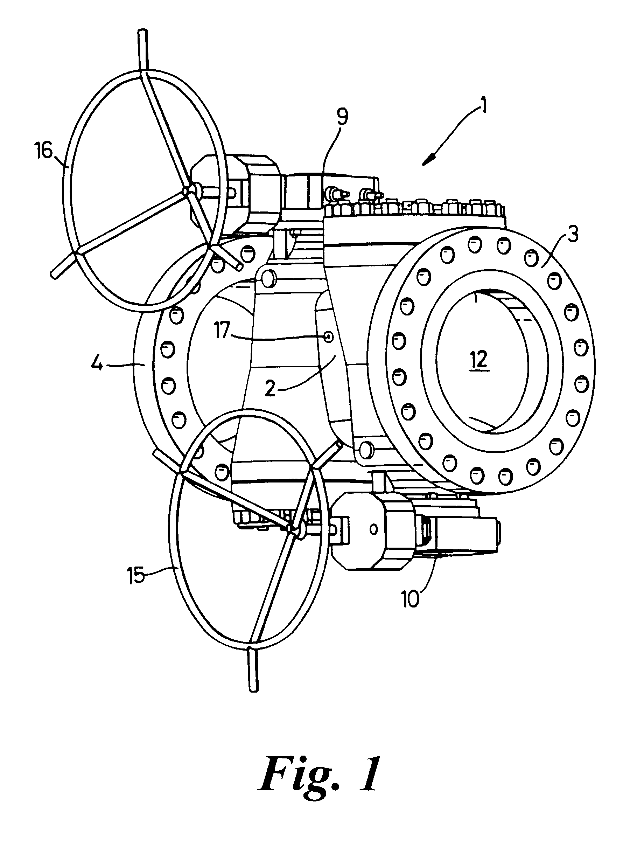

- Fig. 1: shows a perspective view of a tapered plug valve in accordance with the invention;

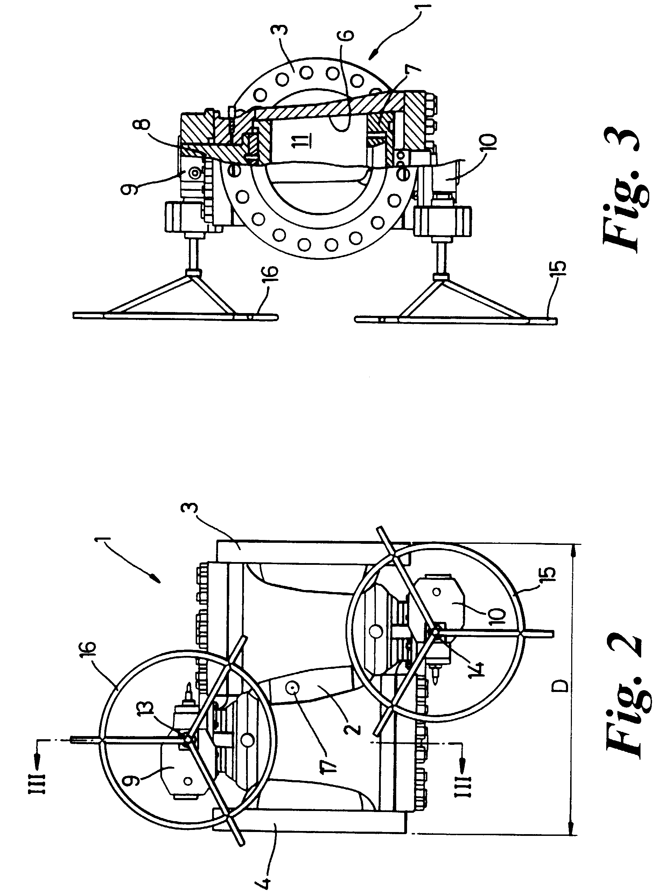

- Fig. 2: shows a side view of the valve shown in Fig. 1; and
- Fig. 3: shows a partial sectional view on section III-III of the valve shown in Figs. 1 and 2.

The tapered plug valve 1 comprises a body 2 having two end flanges. 3.4 spaced apart by a standard distance D, for fitment to associated pipework.

A passageway 12 passes through the body 2 and intercepting the passageway are two bores 6 each having a tapered plug 7 therein. Each plug 7 has a port 11 which may be aligned with the passageway 12 in an open condition of the plug 7 or extending at right angles to the passageway 12 in a closed condition of the plug 7.

Each plug 7 has an axis of rotation which extends vertically and the two plug axes are parallel However one plug and its associated bore is arranged at 180° with respect to the other plug, that is it is inverted with respect to the other plug and associated bore

Each plug 7 has a drive shaft 8 attached to the narrow end thereof, one extending vertically upwards and the other extending vertically downwards Attached to each drive shaft is a horizontally disposed actuating shaft 13.14 and associated actuator 9,10. Each actuating shaft has a handle 15,16 attached at the end thereof. Each actuating shaft extends in the same direction from the associated drive shafts and the handles 15,16 are located on the same side of the valve, one, 16, generally, but not vertically, above the other 15.

A venting facility 17 may be provided in the body between the two bores to check the integrity of the upstream obturator seat.

This construction has the advantage that the two handles 15,16 are enabled to be positioned on the same side of the valve because of the inverted arrangement of one plug with respect to the other. This makes it easier for an operator to operate the valves in the limited space which is available.

## Claims

1. A valve comprising a valve body (2) having two standard parallel flanges (3.4) for attachment to pipework and a passageway (12) therethrough for flow of medium, characterised by two tapered bores (6) intercepting said passageway (12), the axes of the bores (6) extending transversely of the passageway (12), two obturators (7) comprising tapered plugs (7) being located one in each of the bores (6), each plug (7) being rotatable about the respective axis of the bore (6) between a closed position wherein said passageway (12) is blocked and an open position wherein said passageway (12) is unblocked, the axis of one obturator (7) and associated bore (6) being arranged at an angle of at least about 90° with respect to the axis of the other obturator (7) and associated bore (6) and the flanges (3.4) being spaced apart by a longitudinal distance (D) which is the same as a standard distance for a valve comprising one obturator and associated bore.

2. A valve according to Claim 1 characterised in that the axis of said one obturator (7) and associated bore (6) is arranged at an angle of between about 90° and 180° with respect to the axis of said other obturator (7) and associated bore (6).

3. A valve according to Claim 1 characterised in that the axis of said one obturator (7) and associated bore (6) is arranged at an angle of 180° with respect to the axis of said other obturator (7) and associated bore (6).

4. A valve according to any one of Claims 1. 2 or 3 characterised by comprising two drive shafts (8), one drive shaft (8) being associated with said one obturator (7) and the other drive shaft (8) being associated with said other obturator (7).

5. A valve according to Claim 3 characterised by comprising two drive shafts (8), one drive shaft (8) being associated with said one obturator (7) and the other drive shaft (8) being associated with said other obturator (7), the axis of each drive shaft (8) being the same as the axis of the associated obturator (7) and the axes of the two drive shafts (8) being substantially parallel.

6. A valve according to Claim 5 characterised in that one drive shaft (8) extends in one direction and the other drive shaft (8) extends in the opposite direction.

7. A valve according to any one of Claims 1. 2 or 3 characterised in that two rotatable handles (15,16) are provided. one handle (15) being associated with said one obturator (7) and the other handle (16) being associated with said other obturator (7), each handle (15 or 16) being operable to rotate its associated obturator (7) between said closed position and said open position. both handles (15 and 16) being located on the same side of the valve

8. A valve according to any one of Claims 4. 5 or 6 characterised by comprising two actuators (9,10), one actuator (9) being attached to said one drive shaft (8) through a gear system and the other actuator (10) being attached to said other drive shaft (8) through another gear system

9. A valve system according to Claim 8 characterised in that the actuators (9.10) each comprise one of two rotatable handles (15 or 16), both handles (15 and 16) being located on the same side of the valve.

10. A valve system according to Claim 7 or Claim 9 characterised in that the axes of rotation of the two handles (15 16) are parallel.

## Patentansprüche

1. Ventil, umfassend einen Ventilkörper (2) mit zwei Standardparallelflanschen (3,4) zur Befestigung an einer Verrohrung und einem Durchgang (12) durch diesen für einen Strom eines Mediums, gekennzeichnet durch zwei sich verjüngende Bohrungen (6), die den Durchgang (12) schneiden, wobei sich die Achsen der Bohrungen (6) quer zu dem Durchgang (12) erstrecken, zwei Verschlüsse (7), die sich verjüngende Stopfen (7) umfassen, von denen einer in jeder der Bohrungen (6) angeordnet ist, wobei jeder Stopfen (7) um die jeweilige Achse der Bohrung (6) zwischen einer geschlossenen Stellung, in der der Durchgang (12) blockiert ist, und einer offenen Stellung, in der der Durchgang (12) nicht blockiert ist, drehbar ist, wobei die Achse eines Verschlusses (7) und dessen zugeordneter Bohrung (6) unter einem Winkel von zumindest ungefähr 90° in bezug auf die Achse des anderen Verschlusses (7) und dessen zugeordneter Bohrung (6) angeordnet ist, und wobei die Flansche (3,4) durch einen Längsabstand (D) voneinander beabstandet sind, der gleich einem Standardabstand für ein Ventil ist, das einen Verschluß und eine zugeordnete Bohrung umfaßt.

2. Ventil nach Anspruch 1, dadurch gekennzeichnet, daß die Achse des einen Verschlusses (7) und dessen zugeordneter Bohrung (6) unter einem Winkel von zwischen ungefähr 90° und 180° in bezug auf die Achse des anderen Verschlusses (7) und dessen zugeordneter Bohrung (6) angeordnet ist.

3. Ventil nach Anspruch 1, dadurch gekennzeichnet, daß die Achse des einen Verschlusses (7) und dessen zugeordneter Bohrung (6) unter einem Winkel von 180° in bezug auf die Achse des anderen Verschlusses (7) und dessen zugeordneter Bohrung (6) angeordnet ist.

4. Ventil nach einem der Ansprüche 1, 2 oder 3, gekennzeichnet durch zwei Antriebswellen (8), wobei eine Antriebswelle (8) dem einem Verschluß (7) zugeordnet ist, und die andere Antriebswelle (8) dem anderen Verschluß (7) zugeordnet ist.

5. Ventil nach Anspruch 3, gekennzeichnet durch zwei Antriebswellen (8), wobei eine Antriebswelle (8) dem einem Verschluß (7) zugeordnet ist und die andere Antriebswelle (8) dem anderen Verschluß (7) zugeordnet ist, wobei die Achse jeder Antriebswelle (8) gleich der Achse des zugeordneten Verschlusses (7) ist und die Achsen der beiden Antriebswellen (8) im wesentlichen parallel sind.

6. Ventil nach Anspruch 5, dadurch gekennzeichnet, daß sich eine Antriebswelle (8) in eine Richtung und die andere Antriebswelle (8) in eine entgegengesetzte Richtung erstreckt.

7. Ventil nach einem der Ansprüche 1, 2 oder 3, dadurch gekennzeichnet, daß zwei drehbare Griffe (15,16) vorgesehen sind, wobei ein Griff (15) dem einen Verschluß (7) zugeordnet ist und der andere Griff (16) dem anderen Verschluß (7) zugeordnet ist, wobei jeder Griff (15 oder 16) dazu dient, seinen zugeordneten Verschluß (7) zwischen der geschlossenen Stellung und der offenen Stellung zu drehen, wobei beide Griffe (15 und 16) auf der gleichen Seite des Ventiles angeordnet sind.

8. Ventil nach einem der Ansprüche 4, 5 oder 6, gekennzeichnet durch zwei Aktuatoren (9,10), wobei ein Aktuator (9) an der einen Antriebswelle (8) durch ein Getriebesystem befestigt ist, und der andere Aktuator (10) an der anderen Antriebswelle (8) durch ein anderes Getriebesystem befestigt ist.

9. Ventilsystem nach Anspruch 8, dadurch gekennzeichnet, daß die Aktuatoren (9, 10) jeweils einen von zwei drehbaren Griffen (15 oder 16) umfassen, wobei beide Griffe (15 und 16) auf der gleichen Seite des Ventils angeordnet sind.

10. Ventilsystem nach einem der Ansprüche 7 oder 9, dadurch gekennzeichnet, daß die Drehachsen der beiden Griffe (15, 16) parallel sind.

## Revendications

1. Vanne comportant un corps de vanne (2) muni de deux collerettes parallèles classiques (3, 4) servant à la fixation à la tuyauterie, et une voie de passage (12) le traversant servant à l'écoulement du milieu, caractérisé par deux alésages coniques (6) croisant ladite voie de passage (12), les axes des alésages (6) s'étendant transversalement par rapport à la voie de passage (12), deux obturateurs (7) comportant des boisseaux coniques (7) étant situés chacun dans l'un des alésages (6), chaque boisseau (7) pouvant tourner autour de l'axe respectif de l'alésage (6) entre une position fermée dans laquelle ladite voie de passage (12) est bloquée et une position ouverte dans laquelle ladite voie de passage (12) n'est pas bloquée, l'axe de l'un des obturateurs (7) et de l'alésage associé (6) étant agencé à un angle faisant au moins 90° avec l'axe de l'autre obturateur (7) et l'alésage associé (6), et les collerettes (3, 4) étant séparées longitudinalement par une distance (D), qui est la même que la distance normalisée pour une vanne comportant un seul obturateur et alésage associé.

2. Vanne selon la revendication 1, caractérisée en ce que l'axe dudit premier obturateur (7) et alésage associé (6) est agencé un angle compris entre 90° et 180° par rapport à l'axe dudit autre obturateur (7) et alésage associé (6).

3. Vanne selon la revendication 1, caractérisée en ce que l'axe dudit premier obturateur (7) et alésage associé (6) est agencé un angle de 180° par rapport à l'axe dudit autre obturateur (7) et alésage associé (6).

4. Vanne selon l'une quelconque des revendications 1, 2 ou 3, caractérisée en ce qu'elle comporte deux arbres primaires (8), le premier arbre primaire (8) étant associé audit premier obturateur (7) et l'autre arbre primaire (8) étant associé audit autre obturateur (7).

5. Vanne selon la revendication 3, caractérisée en ce qu'elle comporte deux arbres primaires (8), le premier arbre primaire (8) étant associé audit premier obturateur (7) et l'autre arbre primaire (8) étant associé audit autre obturateur (7), l'axe de chaque arbre primaire (8) étant le même que l'axe de l'obturateur associé (7), et les axes des deux arbres primaires (8) étant pratiquement parallèles l'un à l'autre.

6. Vanne selon la revendication 5, caractérisée en ce que l'un des arbres primaires (8) s'étend dans une certaine direction, et l'autre arbre primaire (8) s'étend dans la direction opposée.

7. Vanne selon l'une quelconque des revendications 1, 2 ou 3, caractérisée en ce que l'on fournit deux manettes (15, 16) pouvant tourner, la première manette (15) étant associée audit premier obturateur (7), et l'autre manette (16) étant associée audit autre obturateur (7), et en ce que l'on peut faire fonctionner chaque manette (15, 16) de manière à ce qu'elle fasse tourner son obturateur associé (7) entre ladite position fermée et ladite position ouverte, les deux manettes (15, 16) étant situées du même côté de la vanne.

8. Vanne selon l'une quelconque des revendications 4, 5, ou 6, caractérisée en ce qu'elle comporte deux actionneurs (9, 10), le premier actionneur (9) étant fixé audit premier arbre primaire (8) par l'entremise d'un système d'engrenage et l'autre actionneur (10) étant fixé audit autre arbre primaire (8) par l'entremise d'un autre système d'engrenage.

9. Vanne selon la revendication 8, caractérisée en ce que les actionneurs (9, 10) comportent chacun une manette pouvant tourner (15 ou 16), les deux manettes (15 et 16) étant situées du même côté de la vanne.

10. Vanne selon la revendication 7 ou la revendication 9, caractérisée en ce que les axes de rotation des deux manettes (15, 16) sont parallèles.
